# EUROPEAN PATENT SPECIFICATION

(11) **EP 1 439 093 B1**
(45) Date of publication and mention of the grant of the patent: **02.08.2006**
(21) Application number: 04250255.9
(22) Date of filing: 19.01.2004
(51) Int. Cl.: B60R 5/04, B60N 2/36

(54) **Vehicle parcel shelf**
Hutablage für Kraftfahrzeug
Plage arrière de véhicule

(30) Priority: 18.01.2003 GB 0301179
(43) Date of publication of application: 21.07.2004
(73) Proprietor: Nissan Technical Centre Europe Ltd, Bedforshire MK43 0DB (GB)
(72) Inventor: Neale, Brian, Cranfield, Bedfordshire MK43 0DB (GB)
(74) Representative: Hopley, Joanne Selina

(56) References cited:
- EP-A- 0 857 614
- FR-A- 2 307 678
- FR-A- 2 710 595
- FR-A- 2 752 785
- PATENT ABSTRACTS OF JAPAN vol. 007, no. 005 (M-184), 11 January 1983 (1983-01-11) -& JP 57 164833 A (TOYO KOGYO KK), 9 October 1982 (1982-10-09)

## Description

The present invention relates to a parcel shelf for an automobile or the like. The invention finds particular, but not exclusive, application in automotive vehicles having movable rear seats.

It is known to provide automobiles or other vehicles, and in particular those vehicles commonly known as "hatchbacks" with a rigid or semi-rigid cover extending over the luggage area or compartment (also referred to as the "boot" or "trunk") between a rear bench or seat and the rear hatch door. Such covers are commonly known as parcel shelves.

Until relatively recently, automobiles were almost always provided with a rear bench or rear seats which were fixed and non-movable relative to the vehicle. As such, the distance between the rear seats and the rear hatch door remained constant and thus a parcel shelf of fixed size could be used.

However, recent developments within the automotive industry have led to the introduction of vehicles having a rear bench or rear seats which are movable relative to the rest of the vehicle. Specifically, many vehicles now have rear seats which can be slid forwards and backwards within the cabin of the vehicle, effectively altering the volume of the luggage compartment and thus the distance between the rear seats and the rear hatch door.

A disadvantage of providing a conventional, fixed-size parcel shelf in such vehicles is that, when the rear seats are moved forwardly, away from the rear hatch door, a gap is created between the rear seats and the front of the parcel shelf. Not only is such a gap unsightly, spoiling the aesthetics of the vehicle cabin, but also the gap represents a security hazard in that it is possible for passers-by to look through the gap and into the luggage compartment. Any valuables stored within the luggage compartment may become visible. It is well known that vehicles in which valuables are in view are more likely to be broken into.

This problem has been addressed in one instance by providing a parcel shelf which is formed of two or more shelf members, a front member being slidably extendable from a rear member. The front member is connected to the rear seats and extends out of the rear member as the rear seats are moved forward. Such an apparatus is effective in that the luggage area is covered at all times, even when the rear seats are moved to their forward-most extent, and in that the shelf is aesthetically pleasing.

However, a major disadvantage is that the cost of the apparatus, and particularly of the sliding mechanism, is significantly higher than a conventional parcel shelf.

EP 0857614 and JP 57164833 disclose arrangements for increasing the boot size of a car according to the preamble of claim 1.

It is therefore an aim of the present invention to provide a parcel shelf which addresses the above problem but which does not suffer from the disadvantages of the prior art.

According to one aspect of the invention, therefore, there is provided a parcel shelf for a vehicle comprising a front shelf member and a rear shelf member, the front shelf member comprising a first portion connectable to a seat of the vehicle and a second portion connected to the rear member, wherein the first and second portions are connected by hinge means and are movable between a non-extended position, corresponding to a rear-most position of the seat and an extended position, corresponding to a forward-most position of the seat such that the front and rear members define a substantially continuous, planar or flat surface when the first and second portions are in the extended position.

Conveniently, the first and second portions are arranged to fold, by means of the hinge means, to the non-extended position when the seat is located in its rear-most position.

Advantageously, as the seat is moved forwardly, the first and second portions are arranged to "unfold" towards the extended position wherein the front and rear members define a substantially continuous, planar or flat surface. In one embodiment of the invention, during the unfolding step the rear shelf member remains static whilst the first and second portions of the front member extend to form the substantially continuous, planar or flat surface.

FR-A-2307678 describes a parcel shelf for use in hatchback style vehicles in which an articulated member extends from the anterior (forward) edge of the parcel shelf to a mounting attachment on the backrest of the rear seat. The articulated member secures the parcel shelf in place by exerting a downward force onto the supporting guide rails. In addition, when in the compressed state, the articulated member extends above the horizontal plane of the parcel shelf and thereby serves as a barrier preventing articles such as hats or umbrellas placed on the parcel shelf from sliding forwards onto the necks of passengers sitting in the rear seats when the vehicle brakes. Unlike the present invention, FR-A-2307678 relates to means for securing a parcel shelf in a vehicle in which the rear seats cannot be slid forwards and backwards within the cabin in order to alter the volume of the luggage compartment.

In one embodiment of the present invention, the front member is formed of a different material from the rear member. For example, the rear member may be formed of a substantially rigid, foam- or plastics-based material and the front member may be formed of a more flexible cloth or fabric material. Conveniently, the rear member may be covered or trimmed with a cloth or fabric material and the front member may be formed of the same cloth or fabric material.

Alternatively, the front and rear members may be formed of the same material which may be, for example, a cloth- or fabric-covered rigid or substantially rigid material such as a foam-based or composite plastics material.

The hinge means may comprise any suitable arrangement which permits the first and second portions to hinge or pivot relative to one another. In one embodiment, the hinge means comprises a region of diminished thickness of the front member. In another embodiment, the hinge means may comprise a conventional hinge or a plurality of hinges.

In yet a further embodiment, particularly advantageous in the instance where the front member is formed of a fabric or cloth material, the hinge means comprises a stitch line in the fabric or cloth material which permits the first and second portions to hinge relative to one another. In a specific embodiment of the invention, the stitch line is further reinforced with a rod made from a resilient material such as plastics or metal.

The invention provides the advantage that the parcel shelf can effectively expand and contract, in dependence on the position of the seat, to ensure that the luggage compartment or boot of the vehicle is effectively covered at all times. Moreover, appropriate selection of materials for the parcel shelf allows the parcel shelf to appear substantially continuous in its extended position, thereby providing the illusion that a rigid shelf covers the entire luggage compartment. Further, in one embodiment of the invention, when in the collapsed state the front-shelf member is retracted into the forward section of the boot or trunk space, immediately behind the rear seats. Such an arrangement thereby allows for the rear member of the parcel shelf only to be in full view. Enabling the parcel shelf to appear as a continuous rigid shelf in both the extended and non-extended (i.e. collapsed) confirgurations has substantial benefits from a security perspective. Furthermore, the invention may be significantly less expensive to manufacture than existing parcel shelves.

The present invention will now be described, by way of example only, with reference to the accompanying drawings in which:
Figure 1 is a cross section through a known form of parcel shelf;
Figure 2a is a cross section through a preferred form of parcel shelf according to the invention in a non-extended position;
Figure 2b is a cross section through the parcel shelf of Figure 2a in a semi-extended position;
Figure 2c is a cross section through the parcel shelf of Figure 2a in an extended position; and
Figure 3 is an expanded view of one form of hinge means for use with one embodiment of the invention.

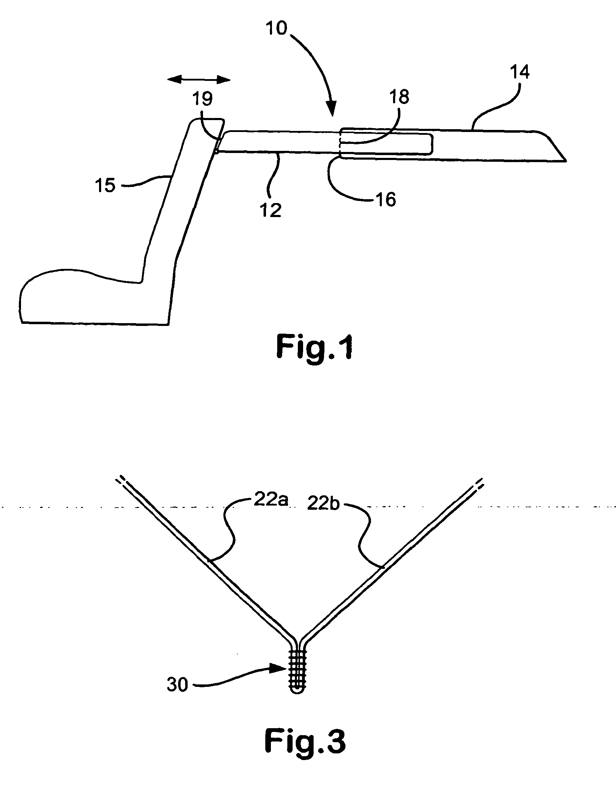

Referring to Figure 1, a known form of parcel shelf is shown in cross section generally at 10. The parcel shelf, which may be formed of any suitable material, comprises a front member 12 and a rear member 14. The rear member 14 is generally planar and, in plan view (not shown), substantially conforms to the shape of the opening of the luggage compartment or boot of a vehicle (not shown). The topography or surface profile of the rear member 14 frequently varies across the shelf for aesthetics purposes.

A front wall 16 of the rear member 14 is provided with an elongate aperture or opening 18 extending substantially across the width of the rear member 14. The front member 12 of the parcel shelf 10 is also generally planar and is mounted within or beneath the rear member 14 for sliding movement relative thereto, through the slot or aperture 18.

A front edge 19 of the front member 12 is connected to an upper rear surface of a rear seat 15 of the vehicle such that as the seat is moved forwardly within the vehicle, the front member 12 of the parcel shelf 10 extends progressively further from the aperture 18. In this way, even when the seat 15 is in its most forward position which would, ordinarily, leave an unsightly and security-poor gap between the parcel shelf and the seat, the luggage compartment is substantially fully covered.

The advantages of this design are compromised by excessive manufacturing costs involved in ensuring a smooth and consistent sliding movement of the front member 12 relative to the rear member 14.

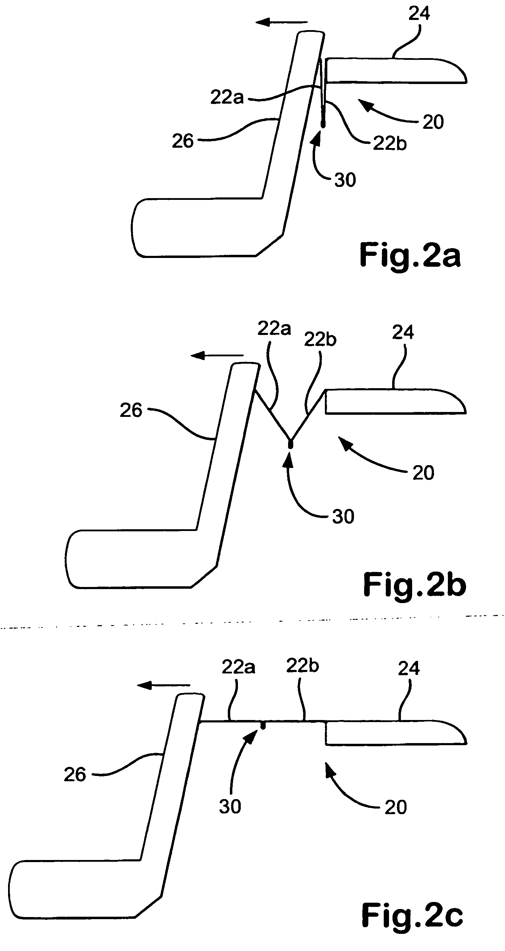

Referring now to Figures 2a to 2c, these illustrate, in section, a first form of parcel shelf according to the invention.

The parcel shelf of the invention, denoted generally at 20, comprises a rear member 24 which is generally similar in structure and function to the rear member 14 of the parcel shelf 10 of Figure 1. Specifically, the rear member 24 is formed of a composite plastics material which is trimmed or covered with a layer of aesthetically pleasing cloth or fabric material. The rear member 24 is shaped substantially to cover the luggage compartment of the vehicle and has means (not shown) for mounting the parcel shelf 20 thereover. Such means may be arranged to permit the rear member 24 to pivot upwardly upon opening of the rear hatch door, in conventional manner, for example by means of strings connecting the rear member 24 to the hatch door.

The parcel shelf 20 also comprises a front member 22, itself comprising a first, forward, portion 22a and a second, rear, portion 22b. Both the first and second portions 22a, 22b are formed of a material identical to, or having similar properties in terms of stiffness and rigidity, to the rear member 24. In addition, both portions 22a, 22b are trimmed in the same fabric or material with which the rear member 24 is trimmed.

The second portion 22b is connected to a front region, edge or surface of the rear member 24 by a first hinge arrangement for pivoting movement relative thereto. In the exemplified embodiment, the hinge arrangement comprises one or more clips (not shown) located on the second portion 22b which are arranged to clip onto a corresponding number of bars (not shown) disposed on the rear member 24. It will be understood, however, that the nature and construction of the hinge means is not limited to this method and that substantially any arrangement which permits pivoting movement of the second portion 22b relative to the rear member 24 can be used.

A front region or edge of the second portion 22b is connected to a rear region or edge of the first portion 22a by means of a second hinge arrangement 30 for pivoting movement relative thereto. Again, the structure of the second hinge arrangement 30 is not essential and substantially any arrangement which permits pivoting movement of the first portion 22a relative to the second portion 22b can be used.

A front region or edge of the first portion 22a is connectable to an upper rear region or surface of a rear seat 26 of the vehicle for pivoting movement relative thereto. Such a pivotable connection may be implemented by means of suitable clips or by a flexible linkage. In a preferred embodiment of the invention the linkage between the front region or edge of the first portion 22a and the upper rear region or surface of a rear seat 26 is not a permanent attachment.

For the avoidance of doubt, it is repeated that the first portion 22a is pivotally connected to one or more rear seats 26 of the vehicle, while the second portion 22b is interposed between the first portion 22a and the rear member 24 and is pivotally connected to both, by suitable hinge arrangements.

Figure 2a illustrates the arrangement of the parcel shelf of the invention in the instance when the rear seat or seats 26 of the vehicle are in their rearmost position, i.e. in a position closest to the rear hatch door (not shown). In this position, the first and second portions 22a, 22b are hinged downwardly, in a non-extended position, together forming a deep V-shape. In effect, the first and second portions 22a, 22b are collapsed in a concertina arrangement.

Preferably, the underside of at least the second portion 22b is trimmed in the same or a similar material to the rear member 24 to provide an aesthetically pleasing effect when the rear member is lifted, for example when the rear hatch door is opened, this being the primary area of the front member 22 which is easily visible in this position.

Figure 2b illustrates the orientation of the parcel shelf 20 when the rear seat 26 is moved forwardly relative to the rear member to an intermediate position. As the seat 26 moves forward, the first and second portions 22a, 22b pivot upwardly, opening out and ensuring that the luggage compartment remains covered. The first and second hinge arrangements, and the connection or linkage between the first portion 22a and the seat 26, permits a substantially uniform movement of the front members, thereby maintaining an aesthetically acceptable effect.

Figure 2c illustrates the orientation of the parcel shelf when the rear seat 26 is in its forward-most position. In this position, the front member 22a is substantially fully extended and defines a generally flat and horizontal surface covering the luggage compartment. To maintain an aesthetically pleasing effect, the first and second portions are, in this position, relatively taut but still permit pivoting movement of the rear member 24 when the rear hatch door is opened.

Opposite movement of the front members 22a, 22b occurs as the seat 26 is moved in a rearward direction.

In another embodiment (not shown), the front portions 22a, 22b are formed of a different material to the rear member. Advantageously, but not essentially, the front portions are formed from a flexible material, for example from the fabric or material used to trim the rear member 24.

The first and second portions 22a, 22b are formed from a single or unitary sheet of the fabric or material, which sheet is connected to the inside front wall of the rear member 24 by means of staples or other suitable fixings. The flexibility of the material provides the means by which the second portion 22b hinges relative to the rear member 24, which hinging may be enhanced by a fold line (not shown) created in the material.

The first and second portions 22a, 22b are defined within the unitary piece of material by means of a stitch line 30, shown in expanded form in Figure 3. The stitch line 30 is created at an intermediate location in the front member which extends across the full width of the front member 22. The stitch line 30 ensures a good hinging movement between the first and second portions 22a, 22b, reducing ruffling or twisting of the material, whilst not requiring any additional elements such as clips or hinges.

Operation of this embodiment is similar to that of Figure 2.

It will be appreciated that the present invention provides an effective yet inexpensive improvement to existing parcel shelf structures. The invention can serve to maintain vehicle security by ensuring that the luggage compartment of the vehicle is covered at all times whilst being aesthetically acceptable.

It will further be appreciated that a number of variations or improvements can be made to the invention. Both the front and rear members may be formed of any suitable material. For example, the entire parcel shelf may be formed of a relatively rigid material, such as that from which the rear member 24 is formed, as a single or unitary piece of material. In this instance, the hinge arrangements may comprise regions of reduced thickness which permit a hinging movement between the rear member 24, the second portion 22b and the first portion 22a.

Alternatively, the front and rear portions 22a, 22b may be formed as separate, discrete elements which are joined by means of a single or unitary piece of the fabric or cloth material used to trim the parcel shelf. The fabric thus acts as the hinge arrangements between the portions, permitting each portion to pivot as described. A unitary piece of fabric may be used to trim the rear member and form the front members in the embodiment where the front members are non-rigid.

The first portion may be connectable to the seat 26 by any suitable method which allows the first portion to pivot relative to the seat.

## Claims

1. A parcel shelf (20) for a vehicle comprising a front member (22) and a rear member (24), the front member (22) comprising a first portion (22a) connectable to a seat (26) of the vehicle and a second portion (22b) connected to the rear member (24), wherein the first and second portions (22a, 22b) are connected by hinge means (30) and are movable between a non-extended position, corresponding to a rear-most position of the seat (26) and an extended position, corresponding to a forward-most position of the seat (26), **characterized in that** the front and rear members (22, 24) define a substantially continuous, planar or flat surface when the first and second portions (22a, 22b) are in the extended position.

2. A parcel shelf (20) according to claim 1 wherein the first and second portions (22a, 22b) of the front member (22) are formed of a rigid material.

3. A parcel shelf (20) according to claim 2 wherein the first and second portions (22a, 22b) are formed from a unitary piece of said rigid material and said hinge means (30) comprises a region of reduced thickness of said material.

4. A parcel shelf (20) according to claim 2 wherein the first and second portions (22a, 22b) are formed from discrete pieces of said rigid material and said hinge means (30) comprises a region of flexible material joining said portions together.

5. A parcel shelf (20) according to claim 4 wherein said flexible material comprises material used for trimming said parcel shelf (20).

6. A parcel shelf (20) according to claim 1 wherein the first and second portions (22a, 22b) of the front member (22) are formed from a flexible material.

7. A parcel shelf (20) according to claim 6 wherein the first and second portions (22a, 22b) are formed from a fabric or other material used to trim the rear member (24).

8. A parcel shelf (20) according to claim 7 wherein said hinge means (30) comprises a stitch line in said fabric or other material.

9. A parcel shelf (20) according to claim 8 wherein said hinge means (30) comprises a stitch line reinforced with a rod made from a resilient material.

## Patentansprüche

1. Gepäckraumabdeckung (20) für ein Fahrzeug, die ein vorderes Glied (22) und ein hinteres Glied (24) umfasst, wobei das vordere Glied (22) einen ersten Teil (22a) umfasst, der mit einem Sitz (26) des Fahrzeugs verbunden werden kann und einen zweiten Teil (22b) umfasst, der mit dem hinteren Glied verbunden ist, wobei der erste und der zweite Teil (22a, 22b) mit einem Scharniermittel (30) miteinander verbunden sind und zwischen einer, einer hintersten Stellung des Sitzes (26) entsprechenden, nicht ausgefahrenen Stellung und einer, einer vordersten Stellung des Sitzes (26) entsprechenden, ausgefahrenen Stellung beweglich sind, **dadurch gekennzeichnet, dass** das vordere und das hintere Glied (22, 24) eine im Wesentlichen durchgehende, ebene oder flache Fläche bilden, wenn sich der erste und der zweite Teil (22a, 22b) in der ausgefahrenen Stellung befinden.

2. Gepäckraumabdeckung (20) nach Anspruch 1, wobei der erste und der zweite Teil (22a, 22b) des vorderen Glieds (22) aus einem starren Material geformt sind.

3. Gepäckraumabdeckung (20) nach Anspruch 2, wobei der erste und der zweite Teil (22a, 22b) aus einem unitären Stück des starren Materials geformt sind und das Scharniermittel (30) einen Bereich verminderter Dicke des Materials umfasst.

4. Gepäckraumabdeckung (20) nach Anspruch 2, wobei der erste und der zweite Teil (22a, 22b) aus diskreten Stücken des starren Materials geformt sind und das Scharniermittel (30) einen Bereich flexiblen Materials umfasst, der die Teile miteinander verbindet.

5. Gepäckraumabdeckung (20) nach Anspruch 4, wobei das flexible Material zum Verzieren der Gepäckraumabdeckung (20) verwendetes Material umfasst.

6. Gepäckraumabdeckung (20) nach Anspruch 1, wobei der erste und der zweite Teil (22a, 22b) des vorderen Glieds (22) aus einem flexiblen Material geformt sind.

7. Gepäckraumabdeckung (20) nach Anspruch 6, wobei der erste und der zweite Teil (22a, 22b) aus einem Stoff oder anderem zum Verzieren des hinteren Glieds (24) verwendeten Material geformt sind.

8. Gepäckraumabdeckung (20) nach Anspruch 7, wobei das Scharniermittel (30) eine Naht in dem Stoff oder anderem Material umfasst.

9. Gepäckraumabdeckung (20) nach Anspruch 8, wobei das Scharniermittel (30) eine Naht umfasst, die mit einem aus elastischem Material hergestellten Stab verstärkt ist.

## Revendications

1. Tablette (20) pour un véhicule qui comporte un organe avant (22) et un organe arrière (24), l'organe avant (22) comportant une première portion (22a) reliable à un siège (26) du véhicule et une deuxième portion (22b) reliée à l'organe arrière (24), selon laquelle les première et deuxième portions (22a, 22b) sont reliées par un moyen d'articulation (30) et sont mobiles entre une position non déployée, qui correspond à une position la plus en arrière du siège (26) et une position déployée, qui correspond à une position la plus en avant du siège (26), **caractérisée en ce que** les organes avant et arrière (22, 24) définissent une surface sensiblement continue, planaire ou plate quand les première et deuxième portions (22a, 22b) sont en position déployée.

2. Tablette (20) selon la revendication 1 dans laquelle les première et deuxième portions (22a, 22b) de l'organe avant (22) sont formées dans un matériau rigide.

3. Tablette (20) selon la revendication 2 dans laquelle les première et deuxième portions (22a, 22b) sont formées dans une pièce unitaire dudit matériau rigide et ledit moyen d'articulation (30) comporte une région d'épaisseur réduite dudit matériau.

4. Tablette (20) selon la revendication 2 dans laquelle les première et deuxième portions (22a, 22b) sont formées dans des pièces discrètes dudit matériau rigide et ledit moyen d'articulation (30) comporte une région de matériau souple joignant lesdites portions ensemble.

5. Tablette (20) selon la revendication 4 dans laquelle ledit matériau souple comporte un matériau utilisé pour garnir ladite tablette (20).

6. Tablette (20) selon la revendication 1 dans laquelle les première et deuxième portions (22a, 22b) de l'organe avant (22) sont formées dans un matériau souple.

7. Tablette (20) selon la revendication 6 dans laquelle les première et deuxième portions (22a, 22b) sont formées dans un matériau en tissu ou autre matériau utilisé pour garnir l'organe arrière (24).

8. Tablette (20) selon la revendication 7 dans laquelle ledit moyen d'articulation (30) comporte une ligne points dans ledit matériau en tissu ou autre matériau.

9. Tablette (20) selon la revendication 8 dans laquelle ledit moyen d'articulation (30) comporte une ligne de points renforcée avec une tige fabriquée dans un matériau résilient.
